# EUROPEAN PATENT APPLICATION

(11) **EP 3 608 650 A1**
(43) Date of publication of application: **12.02.2020**
(21) Application number: 18188320.8
(22) Date of filing: 09.08.2018
(51) Int. Cl.: G01N 1/02, G01N 1/10, B22C 9/22

(54) **SPECIMEN ARRANGEMENT FOR TESTING CHARACTERISTICS OF MATERIALS, AND SPECIMEN MOLD TO FABRICATE THE SPECIMEN ARRANGEMENT**

(71) Applicant: SP Schwäbische Prüfanlagen UG (haftungsbeschränkt), 89522 Heidenheim an der Brenz (DE)
(72) Inventor: Klein, Friedrich, 73431 Aalen (DE)
(74) Representative: Zahn, Matthias

(57) **Abstract**

A specimen arrangement (205) has elongated specimens (200-A, 200-B, 200-C) with equal cross-section along its lengths. The specimen each have first and second ends. The first ends are combined into a common carrier (210) that is located perpendicular to the specimen (200-A, 200-B, 200-C). The second ends (202) are spaced apart in a distance (D3) sufficiently large to allows a fastening device (120) to apply a torque (M) in a length axis (Z) of any specimen (200-A, 200-B-, 200-C). A mold (300) for casting the specimen arrangement (205) has two blocks, with a sprue for receiving molten material. The cavities are arranged in parallel, and elongated in correspondence with the specimens to be elongated pieces. The runner cavity is arranged perpendicular to the cavities. During casting, the molten material can move from the sprue to the runner and then with the same volume stream so that the specimen are casted with equal conditions.

## Description

### Technical Field

In general, the disclosure relates to production processes, or product manufacturing processes by that material is formed into products or material, such as by casting, forging, extrusion, rolling or others. In particular, the disclosure relates to
- a testing machine to measure mechanical characteristics (or properties) of the material by using specimen that are obtained from the material,
- a method to provide an evaluation for the measured properties,
- a specimen arrangement,
- a mold (or "mould") for casting a test specimen arrangement (from a liquid).

### Background

An overview to production processes, measurement and testing technology is given by the following text book: "Industrielle Fertigung. Fertigungsverfahren, Mess- und Prüftechnik" published by Verlag Europa-Lehrmittel, Haan-Gruiten, Germany, 2016. The book is authored by a number of experts. In the following it will be referred to as Schmid et al.

As mentioned in this reference, production processes comprise manufacturing steps in which the composition of materials can be created, kept, reduced, or enhanced. The quality of the material prior to such steps is important. By way of introduction, some of the requirements will be mentioned for forming processes that use phase transitions of materials
- from a solid to a liquid (by melting) and
- from a liquid to a solid (by solidification and cooling)

In casting, liquid materials are poured into a die cavity (or into a "die" or "mold"). The melts then cool down so that the cast products are being finalized as solids.

The materials can be metals or non-metals (such as plastic, ceramic, glass). In metalworking, the materials are pure metals and/or alloys.

Much simplified, a casting house (or "foundry") applies a manufacturing process in that the foundry:
- receives raw materials (i.e., ingots, liquid metals and other ingredients)
- melts the materials to liquids (usually performed in a furnace at certain temperatures and other parameters),
- processes the liquids in so-called secondary treatment (for example, by purifying, by adding or removing substances),
- casts the liquids into molds, and
- cools the liquids (or let them cool) to obtain the cast products.

Auxiliary process steps are required, for example, to transport the liquids to the mold. The transport is usually performed in vessels (such as so-called ladles, or others) with pouring from vessel to vessel.

The cast products can be intermediate products for further processing (by traditional methods) into final products such as, for example, wheel rims (for use in vehicles), hinges or housings (for use in buildings).

The intermediate products and the final products are required to comply with conditions (and parameters) that are quantified in terms such as tensile strength (in MPa or N/mm²), the yield strength R_{0.2%} (in MPa), and the rate of elongation A₅ (in %). The conditions are documented in technical standards. The foundry can usually measure the parameters when the cast products are removed from the mold. Sample testing is a usual approach, wherein only some of the cast products are inspected. Sample testing is especially relevant for destructive tests, for example, for tests on a wheel spoke that is removed from the wheel rim prior to testing.

It is noted that compliance (with the standards) has safety aspects for the final products. For example, a hinge for a window must be able to withstand a standard-defined number of load cycles.

If non-compliance is determined, the products (intermediate and/or final) can be returned to the furnace and the sequence with melting, casting, etc. starts again. This is possible for intermediate and final products. However, this rework process is time-intensive. Some of the process steps show other constraints: steps such as melting are energy intensive, casting is potentially labor intensive, and so on.

Some of the reasons for non-compliance are related to conditions of the manufacturing processing, such as to the material mixture, to the liquid processing steps, etc.

To take the material mixture as an example, there can be inserts (or inclusions) that influence the properties of the cast product, in many cases towards non-compliance with the standards. Such inclusions are usually to be avoided. For metal casting, such undesired inclusion defects can be oxides, silicates, carbides and others.

To increase the chance for standard compliance, the foundry operators can introduce corrective actions, such as changing the material mixture, cleaning, adding or removing substances, etc.

Adding or removing substances can be preferred, but the availability of the substances can be limited (even for costs reasons).

There is a desire to obtain data that indicates potential non-compliance at a point in time when a correction is still possible. Also, the data should give the operator of the production facility a basis to select a corrective action that is appropriate.

Approaches for testing material properties are known in the art. One approach uses the relationship between stress and strain that a particular material displays. This approach is well known in the art as "tensile testing" (or "tension testing") and described in a number of standards (e.g., DIN EN ISO 6892-1:2017-02: "Metallic materials - Tensile testing - Part 1: Method of test at room temperature (ISO 6892-1:2016)). The above-mentioned text book by Schmid et al. explains the test in chapter 7.6.1.

Much simplified, a test sample (or "specimen") is made of an elongated piece that is often a bar with round cross-section. The specimen is placed into a testing machine. The machine applies a pulling force (F) to the ends of the specimen, so that the force acts in parallel to the length (of the specimen). The force changes the geometry of the specimen - usually a deformation by stretching the specimen.

That change is evaluated. Stress (often "sigma" or "σ") is calculated as the ratio of force F over the cross-section area A (of the specimen). Strain ("epsilon" or "ε") is calculated as displacement ΔL (change of specimen length, or "gauge length") over the initial specimen length L. Stress values σ and strain values ε are displayed in a diagram - the so-called "stress-strain curve" or "σ-ε-curve". Such diagrams are available for typical situations in the above manufacturing process, for example, for particular alloys. Foundry operators and experts in casting can see from the diagram if the process leads to condition-complying products (or not).

However, conducting such tests is not free of constraints, among them complexity and timing constraints.
- The tests require pre-test adaptations when the specimens are being fabricated. The specimens are to be adapted for the application of the pulling force. For example, both ends of the bar are to be formed into shoulders or grips. This introduces additional mechanical stress that could influence the measurement. Or, if the shoulder has a thread, stress-distribution is potentially not perpendicular to the cross-section of the bar.
- The pre-test specimen adaptation also takes time. In most manufacturing environments, the production has the priority. Data that indicates potential non-compliance would become available to the operator at a point in time when correction is no longer possible.

While the mentioned tensile tests are suitable for laboratories, the tests do not appear suitable for the foundry, due to the constraints that have been explained.

To summarize this discussion, there is a need for improved testing.

### Summary

A testing approach (with testing machine, specimen etc.) obtains mechanical characteristics of material specimen. Some of the characteristics can be summarized as a set {Rₘ, A₅, R_{0.2%}} of characteristics, being numerical values. For test specimens with the same characteristic values over the cross section, there is no influence from the test procedure:
- Rₘ (ultimate tensile strength, i.e., the stress when the specimen breaks, in MPa)
- A₅ (fracture elongation, given in percent %, at Rₘ i.e. the elongation ε when the specimen breaks, the elongation being permanent)
- R_{0.2%} (the yield strength for that the specimen do change their form plastically with a strain ε of a given value, such as 0.2 %, or other values)
- The yield point as the point on a stress-strain curve that indicates the limit of elastic behavior and the beginning of plastic behavior.

The testing approach can be optimized for the first three characteristics, referred to as "set of characteristics" {Rₘ, A₅, R_{0.2%}}. Variations in the characteristics are possible. For example, the index "5" in A₅ corresponds to the standard and stands for a specimen having a length five times its diameter, but other relations could be referred to as well.

According to embodiments, the present invention uses synergy from the following:
- The specimen is simplified by avoiding pre-test specimen adaptations, or by making such adaptations more efficient.
- The lack of specimen adaptation is compensated in the testing machine by replacing the pulling force by a rotation force (i.e., by a torque).

Measurement data is then processed, usually by a computer that outputs test results in a form (i.e., stress-strain curve) that is equivalent to traditional diagrams.

More in detail, the testing machine applies a torque M (or torque moment, or moment of force, i.e. a rotational force.) instead of the pulling force F. The torque M results in torsion. The effect however is similar: the specimen is subject to stress σ and to strain ε.

The testing machine has fastening devices that do not need to apply a force along the length axis (i.e., the pulling force). As a consequence, the fabrication of specimen is simplified. In comparison to known tensile testing, the time-intensive adaptation (to pulling forces) is no longer required. For example, there is no need for specimen with shoulders, threads or the like.

Since fabricating the specimen is simplified, the foundry operator can obtain them simply by casting material into a specimen mold. Due to relatively small specimen dimensions (small cross-section along the length of the specimen), the time for cooling is negligible. As a consequence the overall testing approach (with obtaining the specimen, testing in the testing machine, and data processing) can be performed within a relatively short time interval. This time interval - the overall testing time - can be measured in minutes. During that time interval, the energy needed to keep the material liquid can be neglected.

The time interval approximately corresponds to the time, which takes the foundry operator to move the vessel (ladle) from the furnace (or from the refiner) to the mold. If the test is negative, casting can be stopped.

A specimen arrangement comprises a plurality of elongated specimens that have equal cross-section shapes along its lengths. The specimens of the plurality are arranged in parallel. The specimens of the plurality each have a first end and a second end. The first ends are combined into a common carrier that is located perpendicular to the specimens of the plurality. The second ends are spaced apart in a distance sufficiently large to allow a fastening device to apply a torque in a length axis of any specimen.

Optionally, the specimen arrangement is being fabricated by casting in a mold. Optionally, is being fabricated by casting in the mold such that the common carrier is formed by a runner of the specimen mold. Optionally, the specimen arrangement is fabricated by casting in a mold having at least two blocks.

Optionally, in the specimen arrangement, the specimens of the plurality are oriented to the common carrier such that at least one first lateral surface of the specimens is oriented such that mechanical forces F_{SHRINK} that occur during cooling cause a wedge effect that results in forces that are directed in the opening direction of the two blocks.

Optionally, in the specimen arrangement, the specimens further have second lateral surfaces that are oriented co-planar with the common carrier. Optionally, in the specimen arrangement, the first lateral surfaces and the second lateral surfaces are surfaces of specimens having hexagonal cross-section.

Optionally, in the specimen arrangement, the common carrier and the plurality of specimens are being manufactured by casting, in the same casting step.

Optionally, in the specimen arrangement, the common carrier is adapted in its shape to be attached to a first fastening device of a testing machine.

Optionally, the specimen arrangement is for use in a material testing machine that applies a torque to an elongated material specimen.

A mold for casting a specimen arrangement comprises a first block and a second block. The blocks are adapted to be combined before casting. The blocks provide cavities for receiving molten material through a sprue - being a cavity as well. (a) The cavities are arranged in parallel. (b) The cavities stretch out in correspondence with the specimen to become elongated pieces. (c) A runner - being a cavity as well - is arranged perpendicular to the cavities. (d) When the specimen mold is arranged in its operating position, the cavities and the sprue are positioned vertically, and the runner is arranged horizontally beneath the cavities, so that during casting, the molten material can move from the sprue to the runner and then with the same volume stream can move from the runner to the cavities.

Optionally, the mold is a permanent mold. Optionally, the mold has a heater/cooler device so that for consecutively casting specimen arrangements, the mold is adapted to have substantially the same temperature. The specimen arrangement can be fabricated by the specimen mold.

A method for providing a specimen arrangement for use in a testing machine is provided. The specimen arrangement comprises a plurality of elongated pieces, being specimens for inserting to a testing machine that applies torque to the specimen for one specimen at a time. The method comprises casting molten material into a mold having cavities in vertical arrangement, with casting through a sprue and a runner of the mold, wherein the molten metal rises within the cavities in substantially equal volume stream.

### Brief Description of the Drawings

FIGS. 1A, 1B and 1C illustrates the testing approach with production equipment in combination with test equipment, wherein FIG. 1A illustrates equipment in general, FIG. 1B illustrates equipment in the context of a foundry, and FIG. 1C illustrates equipment in the context of a rolling mill.
FIG. 2 illustrates a material specimen in various alternative embodiments;
FIG. 3 illustrates the specimen under applied torque that leads to a deformation with length change;
FIGS. 4A and 4B illustrate the specimen implemented as a combination of specimen on a common carrier;
FIGS. 5A, 5B, 5C and 5D illustrate a specimen mold;
FIGS. 6A and 6B illustrate a testing machine;
FIG. 7 illustrates the testing machine, with a multi-specimen arrangement;
FIG. 8 illustrates a test result in form of a stress-strain-diagram provided by processing data from the testing machine; and
FIG. 9 illustrates a flow-chart of a method for testing specimen in the context of a foundry.

### Detailed Description

### Conventions

To illustrate test equipment, some of the figures use coordinate systems. A Cartesian system uses coordinates X, Y and Z. As a writing convention, a dimension along the Z-axis is the length of the specimen (i.e. the length being the longest dimension, given in X). A further coordinate system is a polar coordinate system that also uses some of the XYZ-coordinates. As used herein, a Z_{R}-axis is a center of rotation and the angle φ is a rotation angle. In many cases, the Z-axis and the Z_{R}-axis are the same. Angle φ is conveniently given in degree (°), but other units (such as radian) can be used as well. It is noted that φ is not limited to 360°. Occasionally, degree-numbers (e.g., "90", "270") will be used as references (but without the °).

Measurement units are given in acronyms (mm - millimeters, Nm - Newton meter, MPa - Mega Pascal, N per square mm, etc.).

As the description frequently refers to an illustrative example in casting, it uses terminology accordingly, with terms like "sprue" or "runner" referring to a mold, and to a casting product that is made by the mold (here, the specimen).

Materials are introduced according to chemical symbols (Al aluminum, Cu copper, Mg manganese, Pb lead etc.)

The description starts by explaining test equipment in the context of production equipment, this is convenient to enhance understanding.

### Production and test equipment

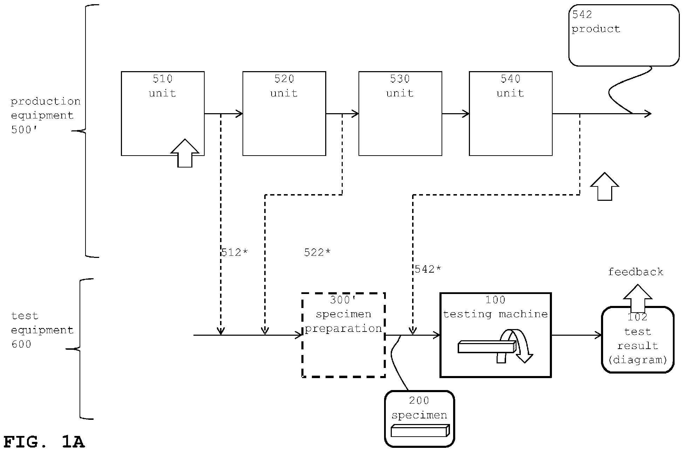

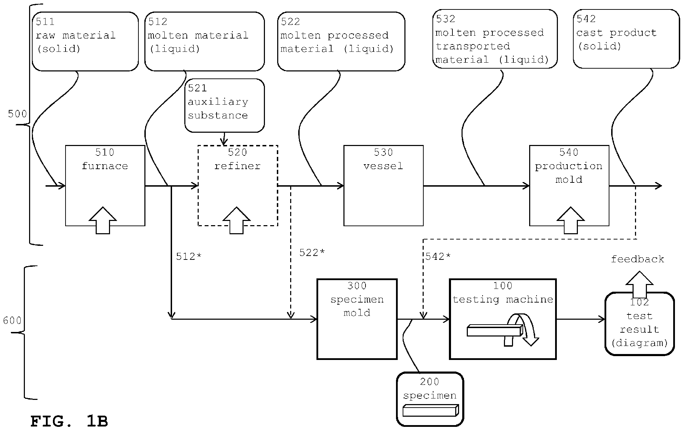

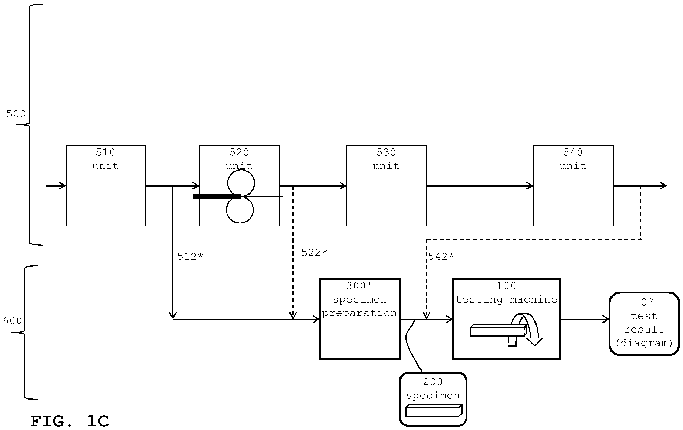

FIGS. 1A, 1B and 1C illustrate the testing approach with production equipment 500', 500 (that provides products 542, at the top of the figures) in combination with test equipment 600 (below).

FIG. 1A illustrates the testing approach in general. FIG. 1B illustrates the testing approach with on overview to equipment 500' being a foundry 500 for casting. FIG. 1C illustrates the testing approach with an overview to equipment 500' being a rolling mill. The testing approach is substantially the same for all types of equipment 500', but those of skill in the art can make adaptations to particular production equipment 500' if needed.

Production equipment 500' comprises several units 510, 520, 530 and 540, such as industrial machines, vehicles, warehouses etc. For simplicity, FIG. 1A illustrates the units in a linear sequence and it can be assumed that one unit performs one manufacturing step (or "stage"). The interactions between the units can be more complex, but this is not relevant here.

As symbolized by top-down vertical arrows, production equipment 500' can provide physical samples 512*, 522* and/or 542* from units 510, 520 and 540, respectively, to test equipment 600. It is noted that not all units need to provide samples.

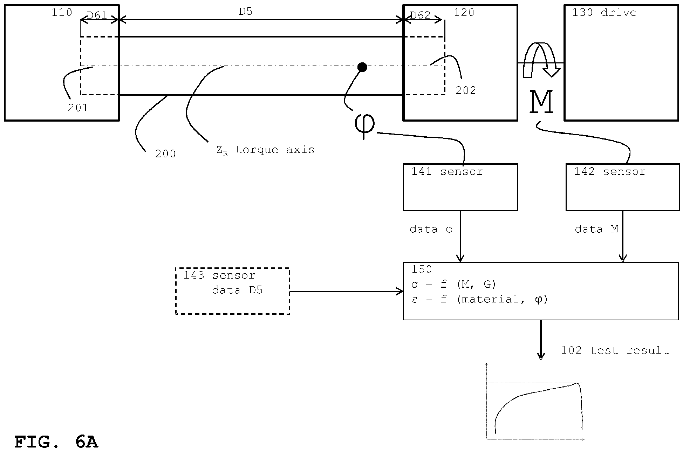

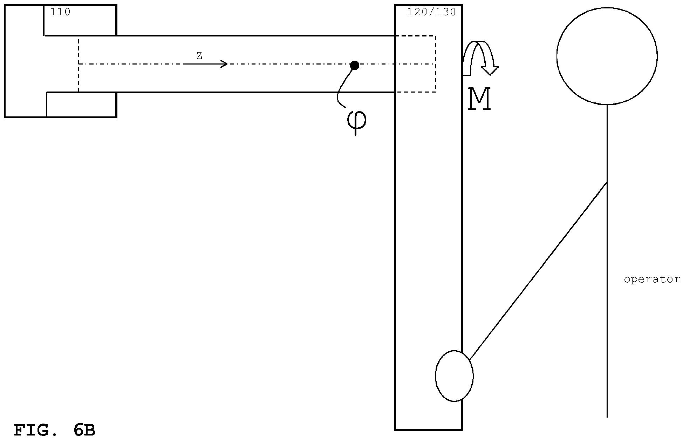

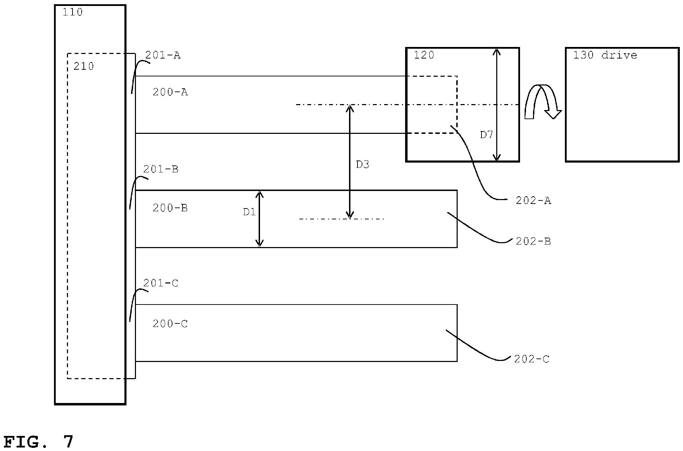

Within test equipment 600, the samples are forwarded to testing machine 100. A sample to be inserted into testing machine 100 is referred to as material specimen 200 (or "specimen" in short). Testing machine 100 provides test result 102, conveniently in the form of a diagram, optionally indicating set {Rₘ, A₅, R_{0.2%}}. Since the details are explained below, some of the aspects are only symbolized: specimen 200 is symbolized by a bar; and testing machine 100 is symbolized by a torque arrow around that bar. Details for test equipment will be explained below in combination with FIGS. 6A, 6B and 7.

Optionally, test equipment 600 comprises a specimen preparation unit 300' that fabricates the specimen from the samples.

Test result 102 is also illustrated by a bold vertical arrow. This arrow is drawn at the symbols for the production equipment, and this arrow indicates information that reflects the technical state of a technical system.

Result 102 that is based on sample 512* refers to a technical system with unit 510. Result 102 that is based on sample 522* refers to a technical system with units 510 and 520. Result 102 that is based on sample 542* refers to a technical system with units 510 to 540. The information (of result 102) can be used to change the state of these technical systems.

### Modify the operation of the foundry

The state information can be used to modify the operation of equipment 500' (e.g., foundry 500). The modification can be applied to the technical system that provides the samples. Modifying can comprise to stop the operation of a particular unit. Assuming the linear sequence, a result from an "early" unit in the chain can be applied to a "later" unit. For example, a result that is based on sample 512* and that indicates non-compliance with standards allows the equipment operator to stop the production.

It is contemplated to physically locate all equipment - production equipment 500' and test equipment 600 to a single manufacturing site, such as to a factory. Such co-location keeps the time to move the samples relatively low. However it is not required that testing is being performed within that manufacturing site (i.e. "on site"). Performing the tests in laboratories outside the site is also possible.

Since adapting specimen to the test is not required, the tests can be performed periodically, for example, every hour.

### Foundry as an example for the production equipment

FIG. 1B illustrates the testing approach with on overview to production equipment being foundry 500 for casting. References are corresponding to that of FIG. 1A.

Foundry equipment 500 is symbolized by rectangles, with furnace 510, refiner 520 (being optional equipment, dashed lines), vessel 530, and production mold 540. Refiner 520 collectively stands for equipment to treat the molten material. The person of skill in the art is familiar with such treatment - sometimes called secondary treatment. It can comprise refining, cleaning, degassing, decarburizing, homogenizing, removing inclusions, chemically modifying inclusions, de-sulphurising, etc.

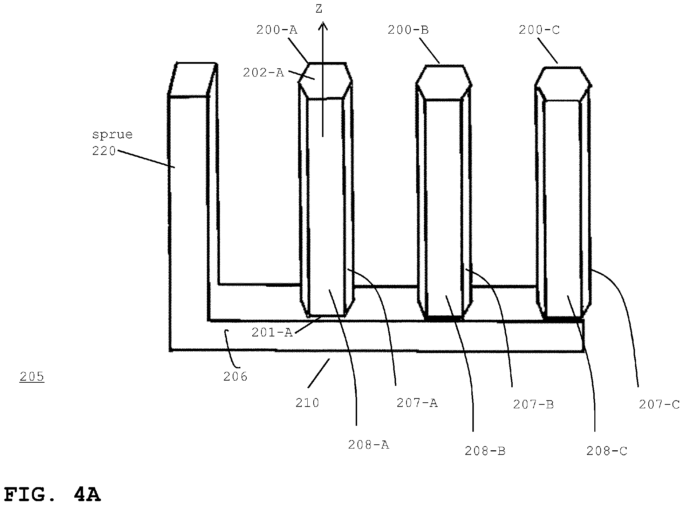

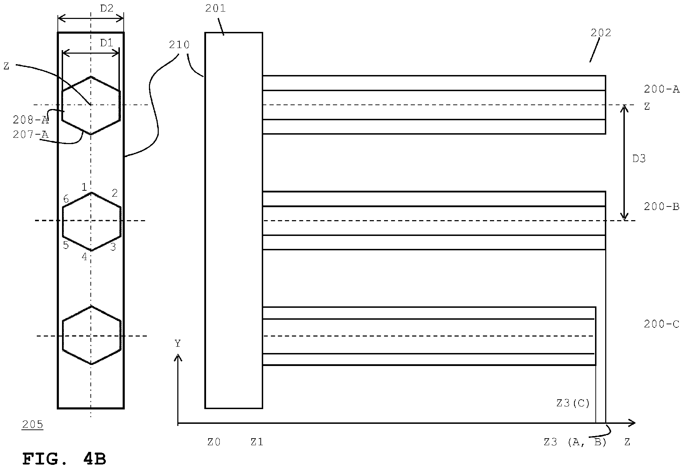

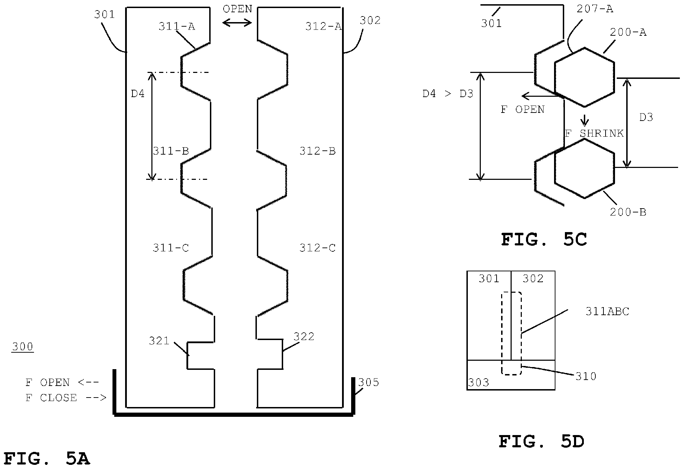

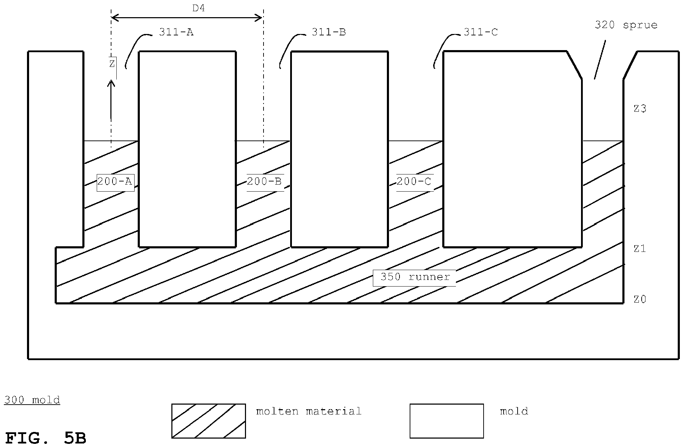

Test equipment 600 is symbolized by bold rectangles. Details for test equipment will be explained below in combination with FIGS. 4A and 4B for specimen 200, FIGS. 5A, 5B, 5C and 5D for specimen mold 300, FIGS. 6A, 6B and 7 for testing machine 100 and test result 102 (e.g., in the form of a diagram).

FIG. 1B further illustrates material flow (i.e. the production process of the foundry), with text and references in round-corner rectangles and with arrows going from left to right.
- Raw material 511 is the (solid) input material for furnace 510.
- Molten material 512 is the (liquid) output material of furnace 510 and is also input material for refiner 520.
- Molten processed material 522 is the (liquid) output material of refiner 520 and is being transported by vessel 530.
- Vessel 530 arriving at production mold 540 provides molten transported processed material 532.
- Production mold 540 provides cast product 542 (solid).

Optionally, auxiliary substance 521 goes into refiner 520 (as input).

Foundry equipment and material flow in combination describe a production process that is common to many foundries. The interactions with the test equipment will be explained in the following. As already introduced in connection with FIG. 1A, vertical lines 512*, 522* and 542* indicate that samples can be physically moved from foundry 500 to test equipment 600. The samples correspond to outputs.
- Sample 512* is taken from molten material 512 of furnace 510.
- Sample 522* is taken from molten processed material 522.
- Sample 542* is one of cast products 542 (for example, one of the mentioned wheel rims or one of the hinges). Sample 542* can also be a part of product 542 (for example, one spoke of the rim).

As it will be explained, samples 512*, 522* or 542* can be processed by (some or all of) test equipment 600:
- Samples 512* or 522* can be casted into specimen 200 for use in testing machine 100. This casting can be performed by a specimen mold explained in connection with FIGS. 5A, 5B, 5C and 5D.
- Sample 542* can be taken as the specimen in testing machine 100. The explanation herein focuses on specimen 200 but is also applicable for sample 542*.

Testing leads to result 102. In addition to a rectangle, result 102 is also illustrated by the bold vertical arrow (as in FIG. 1A). This arrow is drawn at the symbols for the foundry equipment, and this arrow indicates information that reflects the technical state of the technical system (of foundry 500). The information can be used to change the state of that technical system.

Much simplified, and with details to be explained below, the foundry operator can use test result 102 to modify the operation of foundry 500, for example by the following:
- modifying the operation of furnace 510 (e.g., by changing parameters such as the temperature, by changing raw material 511 etc.),
- modifying the operation of refiner 520 (e.g., changing parameters, changing / adding auxiliary substances 521),
- modifying the operation of production mold 540 (e.g., allowing the casting, or eventually stopping the casting),
- redirecting vessel 530 (e.g., to let material return to refiner 520).

In other words, the test result can serve as a decision help for the operator to decide if molten material 512 (or, molten processed material 522) is suitable for use in casting cast product 542 or not. The mentioned modifications are understood to be examples, also for the above-mentioned corrective actions.

There is also a timing aspect. As mentioned in the background section, time can be a constraint, especially in manufacturing environments. To explain the potential advantages of using test equipment 600, FIG. 1 illustrates foundry equipment 500 and test equipment 600 with step sequences from left to right. It can happen that test result 102 becomes available to the foundry operator at the same time (or even earlier) as vessel 530 arrives at production mold 540 with material 532. Depending on the result, casting can be prevented. Or, in other scenarios, vessel 530 can be redirected to refiner 520 or even to furnace 510 (cf. the modifications). Since the material within vessel 530 is still liquid, energy consumption to keep it liquid can be neglected.

Testing can be differentiated into phases having particular durations Ti:

| | |
|---|---|
| T1 | transporting sample 512* (or 522*) to specimen mold 300 (cf. the arrows on the figure); |
| T2 | casting specimen 200 (including cooling it down); |
| T3 | inserting specimen 200 into testing machine 100 and performing the test; and |
| T4 | providing test result 102 (by a computer, with negligible time delay) and forwarding test result 102 within foundry 500 (to the operator, by data transmission, negligible time delay as well). |

The overall testing time T TOTAL can be estimated by summing up: T TOTAL = T1 + T2 + T3 + T4. Assuming T1, T2 and T3 in the order of magnitude of minutes (e.g., approximately 3 minutes), it is fair to estimate that the sequence of testing steps is performed faster than the production process (cf. the material flow). As a consequence, test result 102 can become available at a point in time when some of the production activities can be modified (or even stopped).

### Material development mode

In another scenario, foundry 500 operates in a development mode. There is no vessel 530 and no production mold 540 in use. Samples 512* or 522* are being tested (with the relatively short step to obtain specimen 200, T1 + T2). Such an approach can conveniently be used for developing materials. Materials can be mixed (e.g., from molten material 512 with auxiliary substance 521) with modified parameters (changing the percentage of substance 521) and "de facto immediately" being tested (T TOTAL). Engineers can modify the materials by parameters in cycles (e.g. by adding a certain amount of particular auxiliary substance 521) and obtain test results for each cycle.

This approach may reduce development times.

The testing approach and the consideration of phases are not specific to foundry equipment. Transporting the sample (during T1) to test equipment 600, providing the specimen (T2), inserting specimen 200 into testing machine 100 (T3) and providing the result (T4) is applicable to production in general.

### Rolling mill as a further example

FIG. 1C illustrates the testing approach with an overview to equipment 500 being a rolling mill. The mill has several units 510, 520, 530 and 540, and others. Among then, unit 520 is a press that changes the form of material. Material 512* and material 522* are available before and after the pressing step. Material 542* stands for the product from last unit 540.

Specimen preparation unit 300' symbolizes that specimen can be fabricated from the materials, for example, by cutting long elongated pieces into shorter pieces (that can be inserted to machine 100).

### Specimen for testing

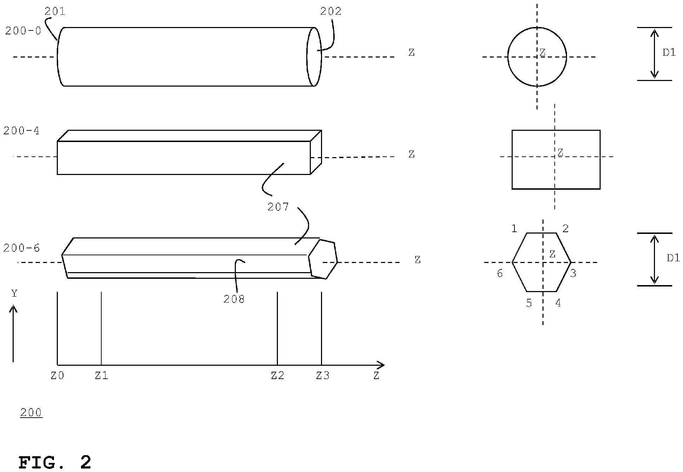

FIG. 2 illustrates material specimen 200 in various alternative embodiments. In general, specimen 200 is an elongated piece (i.e. length Z3 larger than diameter D1) having two ends 201 and 202. (Terms such as "elongated" and/or "elongated specimen" stand in the dictionary meaning: long in relation to the width.) It is noted that length Z3 approximately corresponds to length lₜ that is indicated in the mentioned standard.

For explanation, the figure uses the Z-coordinate, starting at the left with Z = Z0 = 0. Specimen 200 has an overall length Z3 (i.e. between Z0 and Z3). A testing length (cf. D5 in FIG. 6A) is the distance between Z1 and Z2. During the test, specimen 200 will be deformed within that Z1-to-Z2-distance. The portions Z0-to-Z1 at first end 201 and Z2-to-Z3 at second end 202 symbolize that specimen 200 is not substantially deformed when it is held by testing machine 100 (cf. fastening devices in FIGS. 6A and 6B). It is noted that a pre-test adaptation is not required.

Specimen 200 can have different cross-sections (cf. right side of the figure, with axis Z). FIG. 2 differentiates the examples as:
specimen 200-0, with a round cross-section (D1 being the diameter);
specimen 200-4, with a rectangle cross-section (i.e. 4 edges, flat specimen, square specimen are also possible); and
specimen 200-6, with a hexagonal cross-section (with the edges identified as 1,2, 3, 4, 5, and 6, D1 being the diameter).

In other words, the specimen has a profile. The person of skill in the art understands that the profile can show a deviation from the ideal and that tolerances can be specified in technical standards.

In the example of FIG. 2, specimens 200-0, 200-4 and 200-6 show symmetry to length axis Z. For example, the distance from the surface of specimen 200-0 to Z is equal (being the radius), the distance from corners 1-6 of specimen 200-6 to Z is equal as well (i.e. the radius of the outer circle).

As illustrated, length axis Z can correspond to the torque axis Z_{R} (or "torsion axis") by that torque is applied in testing machine 100 (cf. FIGS. 6A, 6B). The correspondence between Z and Z_{R} is convenient for profiles illustrated as in FIG. 2.

Other profiles may not show such symmetry (e.g., U-profiles, L-profiles). The person of skill in the art can identify a suitable length axis Z as well. In some situations the torque axis Z_{R} can be located separately (especially for the specimen being products 542*). In most cases, the torque axis Z_{R} would be selected in parallel to the length axis Z.

Specimen 200 (of FIG. 2) has substantially equal cross-section along its lengths (both in terms of cross-section shape and of cross-section area). In other words, the distance from the Z-axis to the surface (i.e., to the edges, such as edges 1-6 of 200-6) is substantially within pre-defined tolerances (such as given by standards). It is noted that traditional tensile testing (cf. the standard mentioned above) uses specimen that are broader at the end than in the center.

Specimens 200-4 and 200-6 have lateral surfaces 207/208 (i.e. side surfaces) that are rectangles. Pairs of surfaces at opposite sides of the specimens are parallel.

In general, specimen 200 can be fabricated in specimen preparation unit 300' (cf. FIG. 1A, 1C). For testing in combination with a casting equipment (cf. FIG. 1B, the foundry), specimen 200 can conveniently be fabricated in a specimen mold. Such a mold will be explained in connection with FIGS. 5A, 5B, 5C and 5D.

Since specimen 200 is to be inserted into testing machine 100 (cf. FIGS. 1A, 1B, 1C, 6A, 6B etc.), specimen 200 can be adapted for this purpose. However, in comparison to traditional tensile testing, such an adaptation would be less time-consuming (cf. time T2, T3).

For example, specimen 200 can have a receptacle at its front side (i.e. at the circle, rectangle or hexagon at the end). A tool (that is part of a fastening device of testing machine 100) can be in contact with the receptacle. The receptacle can be implemented as a socket. Sockets can easily be inserted into the specimen. The use of sockets may be advantageous if specimen 200 has a circle cross-section. In such cases, the fastening device would not have to be in contact with the surface of the cylinder. In other words, the fastening device would not look like a chuck of a drill (that would apply undesired stress), but rather looks like a screw driver (e.g. with a hex key).

It is noted that specimen 200-6 (hexagonal) with a usual distance D1 in a usual dimension of D1 = 1/2 inch have approximately the same cross-section as standard round specimen in a traditional tensile test, with 12 mm diameter.

### Specimen under applied torque

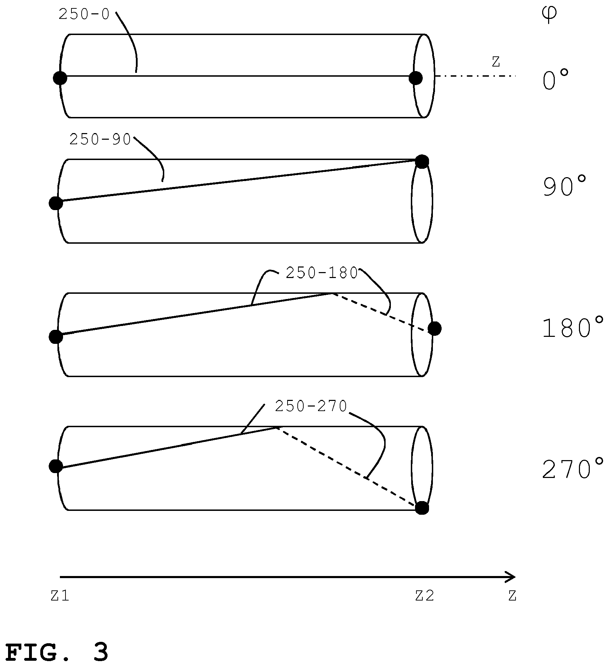

FIG. 3 illustrates specimen 200 under applied torque that leads to a deformation (by torsion) with length change. For simplicity, FIG. 3 takes the example of specimen 200-0 with the round cross-section, but the length change is applicable for any other cross-sections as well (f. FIG. 2). For simplicity, specimen 200 is illustrated with testing length Z1-Z2 only.

Imaginary line 250 at the surface of specimen 200 between two points (black dots, at both ends) symbolizes the deformation. Line 250 can correspond to the edge of a rectangle, hexagon etc. or to the edge of bars that are shaped otherwise.
- Line 250-0 symbolizes torsion angle φ = 0° (i.e. no torsion)
- Line 250-90 symbolizes torsion angle φ = 90°, and line 250-90 is longer than line 250-0. By applying torque, the specimen gets longer.
- Line 250-180 symbolizes torsion angle φ = 180°, and line 250-180 is longer than line 250-90. Line 250-180 is illustrated partly dashed.
- The same principle applies for line 250-270 at torsion angle φ = 270°.

While the figure is not up-to-scale, the person of skill in the art can apply geometrical calculations to estimate the length change. Strain ("epsilon" or "ε") can be then calculated as displacement (i.e., length of line 250) over the initial specimen length L (i.e. between Z1 and Z2). It is noted that the displacement rises with the angle linearly.

It is further noted that in the simplified example of a round cross-section, the distance from the specimen surface to length axis Z is the radius.

### Testing with multiple specimen

To increase the accuracy of testing result 102 (cf. FIGS. 1A, 1B and 1C), testing machine 100 can apply the test for multiple specimens. Testing machine 100 can perform the test with one specimen at a time. Therefore, testing machine 100 performs multiple-specimen testing sequentially. It is noted that testing machine 100 can be adapted for testing multiple specimen in parallel.

Testing with multiple specimens is performed with specimen that have as much as possible characteristics in common. There is an assumption that equal fabrication conditions are beneficial for such common characteristics. Performing the test with multiple specimen can be advantageous, for a number of reasons, such as:
- The test results are substantially equal for all specimens, within pre-defined tolerance bands. A deviation from the tolerances can trigger a repetition of the test.
- As the materials can have inserts (i.e., inclusions, or other non-detected components) that influence the material characteristics, a particular specimen can break "earlier" in comparison to the other specimens. The likelihood to detect such undesired irregularities rises with the number of specimen.

The number of Q = 3 specimen is a compromise between testing efforts and accuracy, but the person of skill in the art can apply other numbers. Convenient numbers are from Q = 3 to Q = 5. For the above-introduced set of characteristics {Rₘ, A₅, R_{0.2%}}, Q = 3 is an advantageous number.

The person of skill in the art understands that the specimen can be obtained from the above-mentioned production equipment as a sample. In case of a rolling mill (cf. FIG. 1C), elongated pieces are available. The pieces just would have to be cut to a length that fit into the testing machine. In the following, the description explains a particular way to obtain multiple specimens from a foundry (i.e., production equipment 600, of FIG. 1B) in a single fabrication step.

### Arrangements with multiple specimens, from a single casting step

FIGS. 4A and 4B illustrate the specimen implemented as specimen arrangement 205 with specimens 200-A, 200-B and 200-C on common carrier 210 (or "connector"). In other words, specimen arrangement 205 is a combination of specimens.

As illustrated, specimens 200-A, 200-B and 200-C are arranged perpendicular to common carrier 210 (T-shaped).

The inter-specimen distance is selected such that testing machine 100 can apply torque to either specimen (A, B or C) without touching the others.

Specimens 200-A, 200-B and 200-C and carrier 210 can be manufactured by a single casting step (cf. specimen mold 300 in FIGS. 5A, 5B, 5C, 5D) so that they form a monolithic item. The following description assumes that such casting is applied.

In case that specimen arrangement 205 is fabricated by casting as explained in connection with FIGS. 5A and 5B, common carrier 210 can be considered as the "runner" and part 220 can be considered as the "sprue". However, during testing, part 220 is not relevant. FIGS. 4A and 4B illustrate specimens with hexagon cross-section, cf. specimen 200-6 in FIG. 2. This is convenient, but not required.

While FIG. 4A illustrates specimen arrangement 205 in a perspective overview, FIG. 4B illustrates the details in a top view (in the figure on the left) and a side-view (on the right). For simplicity, FIG. 4B omits the "runner".

Distance D1 is a measure of the hexagon (twice the inradius). The width D2 of common carrier 210 corresponds to D1. However, exactness is not required, and the figure illustrates D2 slightly larger than D1. It is noted that D2 could be smaller than D1 as well.

D3 is the inter-specimen distance, given here as the distance between the Z-axes between specimens 200-A and 200-B as well as between specimens 200-B and 200-C. Common carrier 210 can be integral part of end 201 (i.e., ends 201-A, 201-B, 201-C, references partly omitted in the figure for simplicity).

The overall length (Z0 to Z3) can vary between the specimens. As illustrated, specimen 200-C is shorter. The reason can be related to the flow of molten material during casting.

The number of specimens in such arrangement is limited, due to inherent restrictions with the specimen mold. For example, a long runner would negatively influence the equality of the specimen. However, the above-introduced number Q = 3 is a convenient and advantageous compromise.

Common carrier 210 - as illustrated here as a cuboid - can be adapted to one of the fastening device of the testing machine. It can be advantageous (for example in terms of time T3) that specimen arrangement 205 can be inserted into the testing machine (instead of inserting individual specimen).

FIGS. 4A and 4B illustrate specimens 200-A, 200-B and 200-C with first lateral surfaces 207-A, 207-B, and 207-C, respectively, and second lateral surfaces 208-A, 208-B and 208-C, respectively.

In the example, the first and second lateral surfaces are located in a 120° angle (due to the hexagonal cross-section). The orientation of the surfaces with respect to common carrier 210 has advantages, at least the following:
(i) Surfaces 207-A, 207-B and 207-C provide a force (F_{OPEN}) that makes it easier to open the specimen mold (cf. FIG. 5A, 5C).
(ii) Surfaces 208-A, 208-B, 208-C are co-planar (i.e. in the same plane) to surface area 206 of common carrier 210. This can be advantageous during testing when specimen arrangement 205 is inserted into testing machine 100 (cf. FIG. 7). In the example, testing machine 100 has a fastening device 120 that applies pressure to surface area 206, cf. FIGS. 6A, 7.

In other words, using specimen with hexagonal cross-section can be advantageous if the specimens are being fabricated in a mold that will be explained in the following. Hexagonal cross-section stands as an example for cross-sections that have such surface orientations (e.g., octagonal, with slightly different angles).

### Specimen mold

FIGS. 5A and 5B illustrate specimen mold 300 in a view from above (5A) and in a side view (5B). FIG. 5C illustrates a detail with a partial view of mold 300 and a partial view of specimen 200. FIG. 5D illustrates the mold in a variation with a further block.

As already explained, specimen mold 300 can provide specimen 200. In the embodiment that is illustrated, specimen mold 300 provides specimen arrangement 205 (cf. FIG. 4A, 4B) as a plurality of specimens (200-A, 200-B and 200-C, Q = 3) by casting in a single step. This approach enhances the testing accuracy, because specimens 200-A, 200-B and 200-C are fabricated under the same conditions (e.g., same material, same time, same temperature etc.). The test result can be provided as a combination of results for individual specimen (combining by averaging etc.).

FIG. 5A shows mold 300 in view from above with blocks 301 and 302 in open position before and after casting. It is noted that using molds with two halves (i.e. blocks) is known in the art. Blocks 301 and 302 are separable and combinable. As indicated by reference 305, the person of skill in the art can provide auxiliary devices to keep both blocks 301 and 302 closed during casting (e.g., by a flask), and/or let the mold open after casting. Both activities are also symbolized by forces F_{CLOSE} and F_{OPEN}.

Mold 300 has cavities 311-A, 311-B, 311-C (for the specimens) and sprue cavity 321 in block 301, and has cavities 312-A, 312-B, 312-C (for the specimens) and sprue cavity 322 in block 302. The cavities are dimensioned such that the specimens will have equal cross-section along their testing length.

FIG. 5B shows mold 300 in a side view, with shading /// for the molten material samples (cf. 512* or 522* in FIG. 1B). Runner 350 can be divided into both blocks as well.

For FIG. 5B, it is assumed that casting specimens 200-A, 200-B and 200-C is not yet completed. The figure shows mold 300 in an up-right position (i.e. the gravity force acting downwards). This corresponds to the position of mold 300 (during casting). The Z-coordinate is illustrated vertically (for specimen 200-A only).

The material (of the mold) has a melting temperature above that of the molten material. In the example, specimen mold 300 is made of steel, and the molten material is an alloy based on aluminum (e.g., AlSi9Cu3 or AlMgSi0,5).

The molten material samples (cf. 512*, 522* in FIG. 1B) are being casted through sprue 320 (by gravity) into runner 310. The material rises inside cavities 311-A, 311-B and 311-C. As mentioned, in FIG. 5B, casting is assumed to be ongoing, so the specimen have not yet reached its final length Z3.

The filing speed is determined at sprue 320 as a single point and applicable for all cavities. Within the cavities, the volume flow (i.e., material volume per time, or "volume stream") is therefore substantially equal. The molten material has the same temperature substantially anywhere in mold 300. The time to solidify is approximately the same for all specimens. In other words, there is simultaneous casting for the specimens.

Specimen homogeneity can be reached (for specimen 200-A, 200-B and 200-C).

Those of skill in the art can apply further technical measures to cast specimens 200-A, 200-B and 200-C as equal as possible.

This equality is not only relevant between specimens 200-A, 200-B and 200-C of the same arrangement 205, but also relevant for consecutive uses of specimen mold 300 and therefore for specimen arrangements 205 that are fabricated over time.

As mentioned above in connection with FIGS. 1A, 1B and 1C, testing can be repeated periodically. There might be situations that mold 300 has a relatively environment temperature (e.g., 25 °C in the foundry) when testing starts, but still has a higher temperature (e.g., 50 °C) when testing continues. As temperature differences may influence the properties of the specimens, heating devices (or cooling devices) in combination with temperature sensors etc. can keep the temperature of mold 300 at a predefined value. Having the temperature controlled can be advantageous to obtain similar casting conditions. There is no need to keep a particular temperature all the time, but setting a particular temperature prior to casting (i.e., shortly before the molten material goes into the sprue, e.g., to approximately 200 °C) may be advantageous. The heater/cooler devices can be implemented, for example, below runner 310.

FIG. 5C illustrates a detail with a partial view of mold 300 (i.e., block 301) and a partial view of specimen 200 (i.e., specimen 200-A and 200-B). The distance D3 between the specimens (in the figures indicated between the Z-axes) can shrink when the specimen arrangement 205 (cf. FIGS. 4A, 4B) is cooling down after casting. The corresponding distance D4 (in mold 300) is therefore slightly larger than D3. Caused by the cooling, a shrinking force F_{SHRINK} acts between the specimen (illustrated between 200-A and 200-B).

However, if specimens 200-A, 200-B and 200-C are implemented as hexagons (200-6, cf. FIG. 2), the hexagon shape makes it easy to remove the (cold) specimen from the mold. The side areas (of the specimen) act like a wedge and apply a force (in the opening direction of the mold, F_{OPEN}). The force F_{OPEN} alone might not be sufficient to open the mold, but it is directed with the opening force that device 305 would apply to the mold. In other words, the wedge effect re-directs F_{SHRINK} (at least partially) to F_{OPEN}.

The person of skill in the art can implement the specimen (and the blocks) differently (even with different cross-sections), but can observe the wedge effect.

Using the hexagon cross-section for the specimen can be considered as providing a (further) synergistic effect: As it will be explained below (cf. FIG. 7), inserting a specimen with hexagonal cross-section into machine 100 is simple, and fabricating specimen 200 (or arrangement 205) is simplified as well due to the wedge effect. In other words, the selection of cross-section with wedges alleviates undesired interactions between mold and product when the molten material cools down.

FIG. 5D illustrates a variation of specimen mold 300, with blocks 301 and 302 (as described) but with additional block 303 arranged below. As illustrated, block 303 can provide runner 310 (dashed lines). Using a 3-block mold can be advantageous for a number of reasons, among them the following: The removal of specimen arrangement 205 (after casting) can be simplified. Integrating the heating/cooling device into block 303 and fixing block 303 to a table or the like keeps electrical wires in a substantially fixed position.

### Specimen mold being a permanent mold (die)

Based on the description herein, the skilled person understands that specimen mold 300 is a permanent mold, in the sense that the mold is reusable. However, one-time-use molds could be used as well.

### Inside the specimen during testing

The description now looks inside the specimen during testing. It is known in the art that applying a mechanical force to a metal material in one direction (such as a pulling force) causes strains in all directions. For example, a pulling force (along the Z direction) reduces the cross section and elongates the length. The approach uses a force that is perpendicular to the Z-direction (i.e., the torque M) that causes a force along Z. In other words, applying a torque has the same effect as applying a pulling force.

For materials that have a crystal structure, the resulting torsion can be regarded as a resulting tension, at the level of crystals.

Details from the perspective of physics particularly in view of metallic bonding are explained by Halla, Franz: "Kristallchemie und Kristallphysik metallischer Werkstoffe", Leipzig 1957, pages 240-253.

### Testing Machine

The description continues by explaining a testing machine. FIGS. 6A and 6B focuses on a machine with a single specimen 200, but with different drives to apply the torque. FIG. 7 will then explain some further features of a machine for specimen arrangement 205.

FIG. 6A illustrates testing machine 100 for measuring mechanical characteristics of an elongated material specimen 200. As explained above, specimen 200 has two ends 201 and 202.

First fastening device 110 is adapted to receive first end 201 of specimen 200. Second fastening device 120 is adapted to receive second end 202 of specimen 200. The figure illustrates both devices 110, 120 on the left and right side, and specimen 200 in a horizontal position. This is convenient for illustration, but not required.

Drive 130 is coupled (i.e. mechanically connected) to at least one of fastening devices 110, 120. Drive 130 allows the application of torque M that leads to torsion of specimen 200. The torsion has already been explained in connection with FIG. 3.

First sensor 141 is adapted to measure torsion angle φ that is applicable to specimen 200 between first fastening device 110 and second fastening device 120. First sensor 141 is adapted to provide torsion angle data (data φ) that represents torsion angle φ.

Second sensor 142 is adapted to measure torque M. Second sensor 142 provides torque data (data M) that represents torque M.

Data processing unit 150 is adapted to process torsion angle data (data φ) and torque data (data M) into stress-strain data (sigma-epsilon, σ-ε). Unit 150 uses a geometry factor G that depends on the cross-section of the specimen 200. More in detail, G depends on the kind of cross-section (cf. FIG. 2, circle, rectangle, hexagon) but not on the cross-section area.

Data processing unit 150 processes torsion angle data (data φ) and torque data (data M) into stress-strain data (cf. result 102 in FIGS. 1A, 1B, 1C) according to
- stress (σ) being a function of torque data (data M) and the geometry factor (G), and
- strain (ε) being a function of the specimen material data and the data φ, wherein G is the geometry factor.

First fastening device 110 and second fastening device 120 are adapted to receive specimen 200 that can have a cross-section being a circle (200-0), a rectangle (200-4), or a hexagon (200-6). Other cross-sections are possible as well. It is noted that products 542* (cf. FIG. 1A, 1B) may have different cross-sections.

The geometry factor G has different values for different shape of cross-sections. The geometry factor can be given as rated value. However, the person of skill in the art can choose the geometry factor as a value within a tolerance band. The following geometry factors G are applicable ("<= G <=" as "from ... to"):
- 1.9 <= G₀ <= 2.1 for circle cross-section,
- 2.9 <= G₄ <= 3.1 for rectangle cross-section, and
- 2.3 <= G₆ <= 2.5 for hexagon cross-section.

The geometry factor G₀ for circle cross-section has a rated value of G₀ = 2.0, but it can be equal to or larger than 1.9 and smaller than or equal to 2.1. The geometry factor G₄ for rectangle cross-section has a rated value of G₄ = 3.0, but it can be equal to or larger than 2.9 and smaller than or equal to 3.1. The geometry factor G₆ for hexagon cross-section has a rated value of G₆ = 2.4, but it can be equal to or larger than 2.3 and smaller than or equal to 2.5.

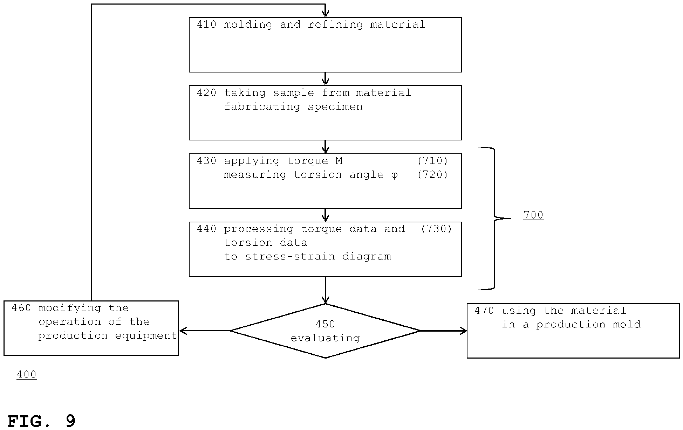

Persons of skill in the art can obtain G by performing a comparison test. For example, the comparison test can have the following steps:
(a) A tensile test is performed with specimen of a standard size (e.g., according to DIN EN ISO 6892). Rₘ is one of the measurement results (i.e., one of the characteristics set).
(b) A test is performed with testing machine 100 (i.e., with the application of the torque, according to the method, cf. FIG. 9)) with specimen 200-4 (rectangle cross-section) or specimen 200-6 (hexagonal cross-section). The test leads to an intermediate value.
(c) The result Rₘ of step (a) is compared with the intermedia value of step (b) and the geometry factor is identified as a linear factor.

### Implementation details

The description now refers to implementation details.

The direction sense (clockwise or counter-clockwise) of drive 130 is not relevant.

The torque (M) can have a magnitude from Mₘᵢₙ = 10 Nm to Mₘₐₓ 1.000 Nm. Such a magnitude range is suitable for specimen made of metal, and Mₘₐₓ is sufficient to let the specimen break.

As used herein, an inter-device distance D5 is defined as the minimal distance between both fastening devices 110 and 120, when specimen 200 has been inserted into machine 100. In absolute terms, distance D5 can be in a range starting at 50 mm (minimal value, D5ₘᵢₙ) and ending at 500 mm (maximal value D5ₘₐₓ). D5 can be considered as the testing distance, or testing length (of the specimen).

It is noted that the absolute value (i.e. between Z1 and Z2) of D5 is not relevant. Convenient values can be similar to standard tensile testing (as in the mentioned DIN EN ISO standard).

The dimension of first and second fastening devices 110, 120 can be such that each fastening device 110, 120 contacts the specimen along a predetermined length D61, D62 (specimen-device-contact-length). Implementing fastening devices 110, 120 that enclose both ends 201, 202 (respectively), in pre-defined length D61, D62 is considered advantageous for having equal testing conditions.

Length D61 at device 110 corresponds to the distance between X0 and X2 (cf. FIG. 2), and length D62 (at device 120) corresponds to the distance between Z3 and Z4.

Length D61 and D62 can be substantially equal. It is possible to define D61 and D62 relatively to the overall length (i.e., from Z0 to Z3) of the specimen. Taking specimen with 100 mm overall length as an example, D61 and D62 can be selected at 10 mm each. Other dimensions are possible as well.

It is noted that the absolute length overall length is not relevant. As noted above in connection with specimen arrangement 205, the length of specimen 200-A, 200-B and 200-C can be different. The different length can however be considered by the geometry factor G.

Therefore, testing machine 100 can comprise third sensor 143 that is adapted to measure the inter-device distance D5. Distance D5 (i.e. data D5) is input for processing unit 150.

During measurement - while the torque is being applied - this distance D5 between first and second fastening devices 110, 120 can remain constant. Keeping the distance (between the fastening devices) allows the specimen to change its length along imaginary line 250 (cf. in FIG. 3).

As explained above, it is advantageous to test a plurality of specimen, in repetitions of the test, i.e. in a test series. It is advantageous to use specimen of the same length (i.e., length D5 as in FIG. 6A).

Depending on implementations of fastening device 110, distance D5 also can change during measurement. In such case, device 110 only provides the counter-torque (to torque M) to that the torsion is applied.

Fastening devices 110 and 120 can have different rotation pattern. First fastening device 110 can be a fixed device (non-rotating during the test) and second fastening device 120 can be the fastening device that is coupled to drive 130, so that it becomes the rotating one. It is also possible to gear both fastening devices 110, 120 together, so that both devices rotate, in opposite sense. Torque is applied as well. Optionally, the devices have separate drives.

Drive 130 can be adapted for application of torque M that is proportionally increasing with torsion angle φ. Drive 130 can be adapted for application of torque M that is increasing with the time. The person of skill in the art can use safety measures, such as limiting the rotation speed (e.g., for specimen break situations), limiting the torque etc.

A gear between drive 130 and fastening device 120 is an optional component.

In testing machine 100, drive 130 can be implemented by a motor (or "engine"), usually an electrical motor. It is noted that motor control techniques are available in the art to set torque M (optionally, in proportion to φ, to the time, safety features etc.). Gears are known in the art, and drive 130 can be implemented as a motor with a gear.

While a motor appears as a traditional choice to apply rotational force (i.e. the torque), the person of skill in the art can use other types of drive. An example will be explained for a torque drive (cf. FIG. 6B). Other drives types may obtain the force otherwise, for example, via pneumatic or hydraulic systems.

In case of the motor, the motor can be step motor and wherein the first sensor 141 is implemented by circuitry that counts the steps. Since a step motor rotates by the same angle for each step, using a step counter is equivalent to measuring the angle.

### Options for the Drive and for the Fastening Devices

FIG. 6B illustrates testing machine 100 with two implementation options. Both options can be implemented separately, but for simplicity they are illustrated by the same figure.

Optionally, fastening device 110 can be implemented by a vise (left side). It is well known that a vise is a mechanical apparatus to secure an object (i.e., the specimen).

Optionally, fastening device 120 can be connected to a torque wrench (i.e., a tool to apply precisely a specific torque) in the function of drive 130. Torque wrenches with electronic units are commercially available, and the person of skill in the art can modify them to obtain the sensor data (φ, M). In other words, the option at the right side of FIG. 6B illustrates a combination of fastening device and drive. As in the figure, a human operator moves the wrench by hand. Of course, the human operator will not be as exact as a motor, but the data (φ, M) is obtained so that in-accuracies can be compensated in the result (102, cf. FIG. 6A).

### Torque Axis

The torque axis Z_{R} is the (imaginary) rotation line of the torque. The torque M can be applied to the length axis Z of the specimen (cf. FIG. 2).

### Testing machine for specimen arrangement

While the description of FIGS. 6A and 6B focused on the general approach with a single specimen (e.g. specimen 200) the description now moves to testing machine 100 that is adapted to specimen arrangements with specimens in parallel (e.g., arrangement 205 of FIGS. 4A and 4B).

FIG. 7 illustrates testing machine 100 for use with multi-specimen arrangement 205 (cf. FIGS. $a, 4B). Second fastening device 120 (i.e., the rotating one) is dimensioned such that rotation is possible when specimen 200 is a combination of specimens 200-A, 200-B, 200-C that are arranged in parallel. FIG. 7 illustrates this by the distance D3 between the specimens (inter-specimen distance, cf. FIG. 4B), by the diameter D1 of the specimen (the largest diameter, cf. FIG. 2, for hexagons, considering the distances between edges 1 and 4), and by diameter D7 of fastening device 120. As in the example, D7/2 + D1/2 must be shorter than D3.

Fastening device 120 is connected to specimen 200-A (for performing the test with A), then to specimen 200-B (test with B) and finally to specimen 200-C (test with C). The order ABC is just an example, and can be changed. Carrier 210 provides additional support for fastening device 110. Carrier 210 can be integral part of fastening device 120.

### (Device 120 can be simplified.)

As illustrated on the left side of the figure, fastening device 110 presses common carrier 210 to a fixed position (similar as the jaws of a vise). It is noted that device 110 does not cover carrier 210 completely, but leaves the transition between carrier 210 and specimens 200-A, 200-B and 200-C open. This approach can be advantageous in situations when D1 is larger than D2, as explained in connection with FIG. 4B.

### Implementation of the Data Processing Unit

Testing machine 100 is associated with data processing unit 150 that performs calculations. Unit 150 can be associated with machine 100, for example,
- by being an integral part of machine 100,
- by being a separate component (located on premise, i.e., in the laboratory, or in foundry 500), or
- by being a computer resource provided by a remote data center.

In other words, unit 150 can be implemented as a computer. The location however does not matter. The calculations are now explained in combination with the test results.

### Stress-Strain-Diagram

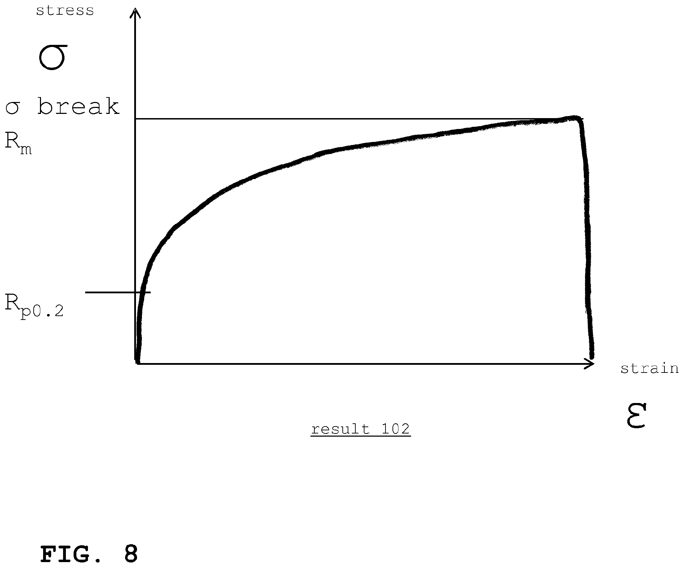

FIG. 8 illustrates test result 102 in form of a stress-strain-diagram (σ-ε-curve) provided by processing data from testing machine 100.
- Stress (sigma) is given in Newton per square milli meter (N/mm²) or - in a different notation in Mega Pascal (MPa), on the ordinate.
- Strain (epsilon) is given by a dimension-less number, on the abscissa.

It is noted that the stress-strain diagram is independent from the testing procedure (or method).

Although the graph in the diagram is illustrated as a line, it is understood that the graph is a combination of points or value pairs (σ, ε)ₖ with k = 1 to K. K is the number of data values obtained by measuring, and K corresponds to the number of individual calculations (by data processing unit 150, cf. FIG. 6A). A convenient range for K is 10 <= K <= 300. As convenient number if K = 100. There is no need for equidistance between σₖ and σₖ₊₁ (and also not between εₖ and εₖ₊₁.

The diagram also indicates, by way of example, the above-mentioned set of characteristics {Rₘ, A₅, R_{0.2%}}.

### Method in application to production equipment in a foundry

FIG. 9 illustrates a flow-chart of the method 400 for testing a specimen in the exemplary context of a foundry (cf. production equipment 600 of FIG. 1B).

In molding and refining material step 410, the foundry operator prepares materials with the usual production process (as shortly described)

In step 420, the operator takes a material sample (e.g., sample 512*, 522* or even product 542*) and fabricates a specimen. This step can be performed with specimen mold 300, but that is not required.

In step 430, the operator applies a torque of known magnitude M and measures torsion angle φ. In step 400, a computer (cf. data processing unit 150 in FIG. 6A) processes the torque data and the torsion data to a result (cf. result 102 in FIG. 1B). The result can be a stress-strain diagram (cf. FIG. 8). In step, the operator 450 evaluates the result. Depending on the evaluation, there is either
- in step 460, modifying the technical system as described above (i.e. the operation of production equipment 600, the foundry) also indicated by the arrow returning to step 410, or
- in step 470 using the material in a production mold (cf. 540 in FIG. 1B)

The approach in FIG. 9 is illustrated as an example. It is noted that in the above-mentioned material development mode, some of the steps are performed slightly differently (e.g., no use of material in a production mold). Also, the approach is applicable to other equipment 600 (cf. FIG. 1A in general, FIG. 1C in particular).

### Method in general

FIG. 9 also illustrates method 700 for testing a material specimen having two ends. The method can be performed in testing machine 100 as described above. In step 710, the machine applies a torque M between the two ends and measures a series of torque measurement data (data M). In step 720, the machine measures the torsion angle (φ) to obtain torsion angle data (data φ). In step 730, a data processing unit (that can be part of the machine) processes the torsion angle data (data φ) and the torque data (data M) to obtain a stress-strain relation as result (cf. result 102). Thereby, the data processing unit operates according to a pre-determined relation, with stress (σ) being a function of torque data (data M) and the geometry factor (G) and strain (ε) being a function of specimen material data and the data φ. Geometry factor G depends on the cross-section A of the specimen 200.

### Comparison

By way of example, the description now provides some experimental results. It is noted that by performing simple tests, the geometry factors can be obtained. The experimental results are Rₘ in N/mm² and permanent strain ε_{P} (at Rₘ) in %. ε_{P} is permanent and corresponds to the above-mentioned standard-defined A₅.

A first test series used specimens from a rolling mill with the same material (AlCu4MgPb).

For specimen 200-4 (rectangle cross-section), Rₘ was identified as 312.4 (plus/minus 2.9) N/mm², and ε_{P} was identified as 17.25 % (plus/minus 0.64). G₄ was 3.0.

For specimen 200-6 (hexagonal), Rₘ was identified as 312.4 (plus/minus 3.4), and ε_{P} was identified as 16.14 % (plus/minus 0.46). G₆ was 2.4.

The values for Rₘ and εₚ are similar. The selection of the cross-section does not change the result.

A second test series used specimens from a foundry (i.e., by casting), with AlMgSi0,5 as the material.

For specimen 200-6 (hexagonal), Rₘ was identified as 249.1 N/mm² (plus/minus 3.0), with G₆ = 2.4.

For a specimen tested by the traditional tensile test, Rₘ was 254.9 (plus/minus 0.2), ε_{P} was 23.91 % (plus/minus 0.15). Of course, there was no geometry factor required.

### Further considerations

Persons of skill in the art can introduce modifications. For example, specimen mold 300 could be implemented as a one-time-use mold.

In addition to the testing methods that have been described, image processing can be applied in addition, for example to investigate the breaking (i.e., investigating the cleavage plane).

The foundry operator can assign different roles to the persons working on-site, among them a quality control role.

Test result 102 can be further processed (by a computer) by comparing it with pre-defined reference results.

As testing a particular specimen is finished when it breaks, the data can be enhanced by measured and/or calculated values that relate to the break of the specimen. In case of the break, both ends 201 and 202 are not physically connected any longer). A break torque M_{B}, can be provided as the torque value by that the specimen breaks (e.g., measured as 78 Nm). A break angle φ_{B} can be the corresponding angle value (e.g. measured as 146°)

Some of the above-mentioned modifying can be implemented for automatic execution by a computer. In that case, the computer uses test result 102 to obtain control signals that interacts with the foundry equipment. For example, a control signal could stop production mold 540 if test result 102 indicates a non-tolerable deviation from pre-defined values.

Depending on the material of the specimen, Rₘ can be defined otherwise, for example as the ultimate strength that is the maximal possible force F applied while the specimen does not yet break.

A modified testing machine can have first and second fastening devices in the number of specimens. Such a machine could perform multiple tests in parallel.

### References

- 100: testing machine
- 102: test result
- 110, 120: fastening devices
- 130: drive, motor/wrench
- 14x: sensors
- 150: data processing unit
- 200: specimen
- 200-...: specimen with -0, -4, -6 number of edges, -A, -B- C individual specimen
- 201,202: ends (of specimen)
- 205: specimen arrangement with a plurality of specimens
- 206: surface area of common carrier
- 207-..., 208-...: lateral surfaces
- 210: common carrier (specimen), runner
- 220: sprue (of the specimen)
- 250: imaginary line at the surface of the specimen 250-φ according to torsion angle by example
- 300', 300: specimen preparation unit; specimen mold
- 301, 302, 303: blocks of the specimen mold
- 305: auxiliary device to keep both mold blocks together during casting, such as by a flask, and to open the mold
- 310: runner (of the mold)
- 311, 312: cavity in the specimen mold
- 320, 321, 322: sprue (of the mold)
- 4xx: method
- 500', 500: production equipment; foundry
- 5x0: production units, components of production equipment
- 5x1, 5x2: intermediate products, such as materials at input and outputs of the production units
- 512* 522* 542*: samples
- 600: test equipment
- X, Y, Z: coordinates
- D1: diameter of specimen
- D2: carrier width
- D3: inter-specimen distance in the specimen arrangement
- D4: inter-specimen distance in the mold
- D5: inter-device distance
- D61, D62: specimen-device-contact-length
- D7: diameter of fastening device
- φ: torsion angle
- σ: stress
- ε, ε_{P}: strain, permanent strain
- A: cross-section area
- A₅: permanent fracture elongation
- F_{OPEN}: opening force (from the specimen to the mold)
- F_{CLOSE}: closing force
- F_{SHRINK}: force during cooling
- F: force
- K: number of data points
- ΔL: displacement
- M: torque

## Claims

1. Specimen arrangement (205), comprising a plurality of elongated specimens (200-A, 200-B, 200-C) that have equal cross-sections along its lengths, **characterized in that** the specimens (200-A, 200-B, 200-C) of the plurality are arranged in parallel;
the specimens (200-A, 200-B, 200-C) of the plurality each have a first end (201-A, 201 - B, 201-C) and a second end (202-A, 202-B, 203-C), wherein the first ends (201-A, 201-B, 201-C) are combined into a common carrier (210) that is located perpendicular to the specimens (200-A, 200-B, 200-C) of the plurality, and wherein the second ends (202) are spaced apart in a distance (D3) sufficiently large to allow a fastening device (120) to apply a torque (M) in a length axis (Z) of any specimen (200-A, 200-B-, 200-C).

2. Specimen arrangement (205) according to claim 1, being fabricated by casting in a mold (300).

3. Specimen arrangement (205) according to claim 2, being fabricated by casting in the mold (300) such that the common carrier (210) is formed by a runner (310) of the specimen mold (300).

4. Specimen arrangement (205) according to claim 3, being fabricated by casting in a mold (300) having at least two blocks (301, 302) that are separable and combinable.

5. Specimen arrangement (205) according to claim 4, wherein the specimens (200-A, 200-B, 200-C) of the plurality are oriented to the common carrier (210) such that at least one first lateral surface (207-A, 207-B, 207-C) of the specimens is oriented such that mechanical forces (F_{SHRINK}) that occur during cooling cause a wedge effect that results in forces (F_{OPEN}) that are directed in the opening direction of the two blocks (301, 302).

6. Specimen arrangement (205) according to claim 5, wherein the specimens (200-A, 200-B, 200-C) further have second lateral surfaces (208-A, 208-B, 208-C) that are oriented co-planar with the common carrier (210).

7. Specimen arrangement (205) according to claim 6, wherein the first lateral surfaces (207-A, 207-B, 207-C) and the second lateral surfaces (208-A, 208-B, 208-C) are surfaces of specimens (200-A, 200-B, 200-C) having hexagonal cross-section.

8. Specimen arrangement (205) according to any of claims 1 to 7, wherein the common carrier (210) and the plurality of specimens (200-A, 200-B, 200-C) are being manufactured by casting, in the same casting step.

9. Specimen arrangement (205) according to any of claims 1 to 8, wherein the common carrier (210) is adapted in its shape to be attached to a first fastening device (110) of a testing machine (100).

10. Specimen arrangement (205) according to any of claims 1 to 9, for use in a material testing machine (100) that applies a torque to an elongated material specimen (200).

11. Mold (300) for casting a specimen arrangement (205), the mold (300) comprising a first block (301) and a second block (302) that are adapted to be combined before casting, wherein the blocks provide cavities (311-A, 311-B, 311-C) for receiving molten material (512*, 522*) through a sprue (320), the mold (300) **characterized by** the following:
a) the cavities (311-A, 311-B, 311-C) are arranged in parallel;
b) the cavities (311-A, 311-B, 311-C) are elongated in correspondence with the specimen to be elongated pieces;
c) a runner cavity (310) is arranged perpendicular to the cavities (311-A, 311-B, 311-C);
d) when the specimen mold (300) is arranged in its operating position, the cavities (311-A, 311-B, 311-C) and the sprue (320) are positioned vertically, and the runner (310) is arranged horizontally beneath the cavities, so that during casting, the molten material can move from the sprue (320) to the runner (310) and then with the same volume stream from the runner (310) to the cavities (311-A, 311-B, 311-C).

12. Mold (300) according to claim 11 **characterized by** being a permanent mold.

13. Mold (300) according to any of claims 11 or 12, **characterized by** a heater/cooler device so that for consecutively casting specimen arrangements (205), the mold (300) is adapted to have substantially the same temperature.

14. Specimen arrangement (205) being fabricated by a specimen mold (300) according to any of claims 11 to 13.

15. Method for providing a specimen arrangement (205) for use in a testing machine (100), wherein the specimen arrangement (205) comprises a plurality of elongated pieces, being specimens (200-A, 200-B, 200-C) for inserting to the testing machine (100) that applies torque to the specimen (200-A, 200-B, 200-C) for one specimen at a time, the method with casting molten material into a mold (300) having cavities (311-A, 311-B and 311-C) in vertical arrangement, with casting trough a sprue (320) and a runner (310) of the mold, wherein the molten metal rises within the cavities in substantially equal volume stream.
